# EUROPEAN PATENT SPECIFICATION

(11) **EP 0 949 952 B1**
(45) Date of publication and mention of the grant of the patent: **07.01.2004**
(21) Application number: 97937285.1
(22) Date of filing: 14.08.1997
(51) Int. Cl.: B01D 35/027, F16L 37/092, F16L 37/08

(54) **WATER PURIFIER WITH COLLET AND TUBE SUPPORT AND ASSEMBLY METHOD**
WASSERREINIGUNGSGERÄT MIT SPANNZANGE UND ROHRHALTER SOWIE VERFAHREN ZUM ZUSAMMENBAU
PURIFICATEUR D'EAU MUNI D'UNE DOUILLE DE SERRAGE ET D'UN SUPPORT DE TUBE ET PROCEDE D'ASSEMBLAGE

(30) Priority: 14.08.1996 US 689883; 06.12.1996 US 761121
(43) Date of publication of application: 20.10.1999
(73) Proprietor: Reid, Roger P., Caldwell, ID 83606 (US)
(72) Inventor: Reid, Roger P., Caldwell, ID 83606 (US)
(74) Representative: Gee, Steven William
(86) International application number: PCT/US1997/014427
(87) International publication number: WO 1998/006475

(56) References cited:
- EP-A- 0 598 954
- GB-A- 1 464 741
- US-A- 3 653 689
- US-A- 4 178 023
- US-A- 4 526 411
- US-A- 4 645 245
- US-A- 5 127 682
- US-A- 5 257 825
- US-A- 5 338 073
- US-A- 5 635 058

## Description

### Field of the Invention.

Embodiments of the present invention relate to water purification and to systems for fluid tight connections in fluid processing systems.

### Background of the Invention.

As an introduction to problems solved by the present invention, consider the conventional water purifier as installed in a confined space near mechanical equipment. Such a water purifier when necessarily installed with sharp bends in influent and effluent water tubes and when exposed to equipment vibration conducted by the tubes often weeps at an influent or effluent port. Intermittent weeping is difficult to detect, diagnose, and repair. Replacement of the water purifier is expensive in direct costs as well as costs related to interruption of purification services. The fluid passageway responsible for weeping is an open conduit for infectious contamination of the water systems connected to the water purifier. Because weeping is often intermittent for an extended period of time before it is detected, serious contamination may result in significant health hazards brought on unexpectedly in conjunction with a device purported to purify water. The worldwide market for water purifiers is consequently affected by the lack of watertight ports on conventional water purifiers.

In addition, other conventional fluid processing systems having an emphasis on sealed vessels and ultra-pure processes. Conventional fluid processing systems include, for example, water purification systems manufactured for high volume applications such as commercial carbonated beverage dispensers and residential ice making systems. In such systems, reducing the labor element of equipment manufacturing costs is critical to market penetration and retention. Without a reliable water purifier having simpler parts and involving simpler manufacturing methods, the cost of water purification will remain high. As a consequence, more widespread use of reliable water purification will remain unnecessarily restricted in important markets that affect personal care, national health and safety, and economic development in countries throughout the world. Additional restrictions in related markets will persist for fluid processing equipment, of which water purification systems are but one example.

U.S. Patent 4,645, 245 ("Cunningham") discloses a Quick Connect Tube Coupling. The Cunningham device includes a seal and a retainer seat inserted into a first end of a bore in a coupling body member. The first end of the Cunningham bore further receives a threaded tube nut with an interior cammed ramp wall that facilitates insertion of a fluid conduit tube into the tube nut from the direction of the first end of the bore.

U.S. Patent 5,338,073 ("Washizu, et al") discloses a Slender Pipe Connecting Connector, and specifically a connector body having a first end with a bore receiving an inserted pipe, and a second end having external surface notched structure for gripping the inside surface of a resin tube or rubber hose. The Washizu, et al. connector body features a stepped internal chamber that steps to its smallest inner diameter at said second end. Seals and retainers are inserted into the first end of the connector.

Likewise, U.S. Patent 5,127,682 ("Washizu") discloses a Joint, including a body with an enlarged first end bore, and a reduced second end bore. The Washizu first end bore receives seals, spacers, and a pipe, while the body's second end receives a resin or rubber tube on its outer surface.

British Patent GB 1,464,741 discloses a Connector for Fluid Conduits, which, like the above-described art, also includes sealing and retainer structure inserted into a body bore from the same end into which the pipe in inserted. The body of the Connector for Fluid Conduits includes a first end bore receiving a seal, an annular member, a force-fitted sleeve, a clamp with jaws, and a pipe, all inserted from the direction of the body first end. The body second end comprises a reduced-diameter bore against which the pipe abuts.

The Pipe Joint of European Patent Application 0 598 954 A1 illustrates another connector/joint body having a bore featuring its largest diameter near its first end, which receives a hose, and its smallest diameter near its second end. Into the bore first end are inserted an o-ring, ring, and collet for sealing to, and grasping, the hose, which is also inserted into the first end for improving the seal or stabilization of the hose inside the body by modifying the structure inserted into the hose-end of the body.

In view of the problems described above and related problems that consequently become apparent to those skilled in the applicable arts, and which problems are not addressed or solved by the prior art documents, the need remains in water purification for watertight connections in water purification systems.

### SUMMARY OF THE INVENTION

The present invention comprises a water purifier, including a first system for water purification, and a second system for sealing a tube to the first system. The system for sealing the tube comprises a port into the water purification unit, the port having an opening and an axis through the opening. The port includes a collet, a seal, and a support ring. The collet, positioned within the opening and generally coaxial with the port axis, receives a tube for water or other fluid passage into or away from the purifier. The tube is sealed to the port opening by the seal, so that the tube is in fluid communication with the first system. The support ring, which is in mechanical communication with the tube and in series between the collet and the seal, limits movement of the tube in a direction off the axis.

The support ring of the present invention limits radial movement of the tube in a region near the seal. By limiting radial movement, a watertight seal is maintained within a range of motion allowed by the seal. In addition, the support ring is preferably manufactured of a rigid, nonhygroscopic material so that its dimensions hold to a higher tolerance and thereby compensate for manufacturing, installation, and aging effects on dimensions and materials critical to sealing water purifiers and other fluid processing units. Higher reliability and longer life result from such a design, leading to greater market success and expanded use in a variety of fluid technologies.

The present invention includes embodiments where the enclosure surrounds the collet.

An enclosure may include a bore without the first and second steps, but which bore receives an O-ring or other seal, a support ring, and a plug that retains the seal and the support ring in the enclosure bore. In such an embodiment, the enclosure bore may include a frustoconical surface near a first end of the bore and an abutment surface within the bore. The support ring is located within the bore and in mechanical communication with the abutment surface. The plug is joined to the bore at a second end of the bore. The preferred O-ring or other sealing member seals the tube to the enclosure and the plug is joined to the enclosure to retain the O-ring and the support ring in the bore. Manufacturing for this alternative embodiment is simplified, reducing costs, and consequently opening new markets for water purifiers of the present invention.

In one embodiment of the present invention, a water purifier or other apparatus for fluid processing is assembled by inserting, in sequence, a support ring, and then an O-ring into a bore of an enclosure or other vessel. The enclosure has a bore for receiving a tube. The bore has an axis. The axis is an axis of assembly and not necessarily an axis of symmetry of the enclosure. Axial assembly of the enclosure proceeds in part in a first direction into the enclosed space of the enclosure and in part in an opposite, second, direction away from the enclosed space. The tube is introduced into the assembled vessel in the first direction. The support ring and the O-ring are inserted in the second direction. In a final step, a plug is joined to the enclosure over the bore. This plug-installation-assembly uses the step of joining a plug in the second direction to a portion of the enclosure, preferably instead of joining a collet retainer or other cap to the enclosure in the first direction. Compared to prior methods, this plug-installation-assembly method is simpler to complete without affecting the reliability of the fluid-tight seal between the enclosure and the tube and, thus, results in lower manufacturing costs.

### BRIEF DESCRIPTION OF THE DRAWINGS

Figure 1 is a perspective view of a design of water purifier.
Figure 2 is a perspective view of another design of water purifier
Figure 3 is a cross section of a port of the water purifier of Figure 1.
Figure 4 is a cross section of a port in another design, wherein an enclosure serves as the support retainer.
Figure 5 is a cross section of a port in another design, wherein an enclosure serves as the support retainer.
Figure 6 is a cross section of a port in yet another design, with an enclosure serving as the support retainer.
Figure 7 is a cross section of a port in embodiment of the present invention, wherein the enclosure serves the functions of both collet retainer and support retainer and wherein the support ring and seal are captured in the bore with the use of a plug.
Figure 8 is a cross section of a port in a further embodiment of the present invention, including an alternative embodiment of the enclosure and plug system.
Figure 9 is a cross section of a port of another design, with an extended collet retainer and flat support ring.

### DESCRIPTION OF THE PREFERRED EMBODIMENTS

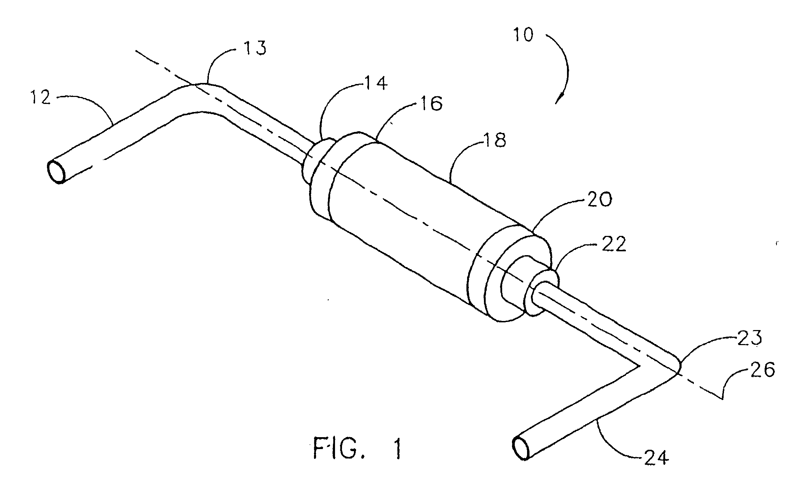

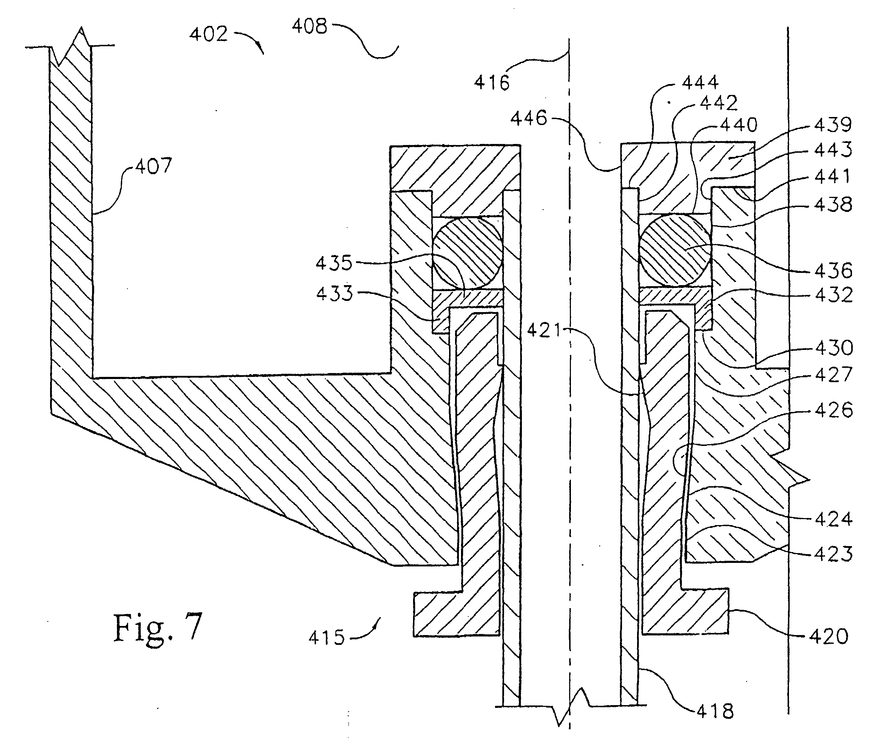

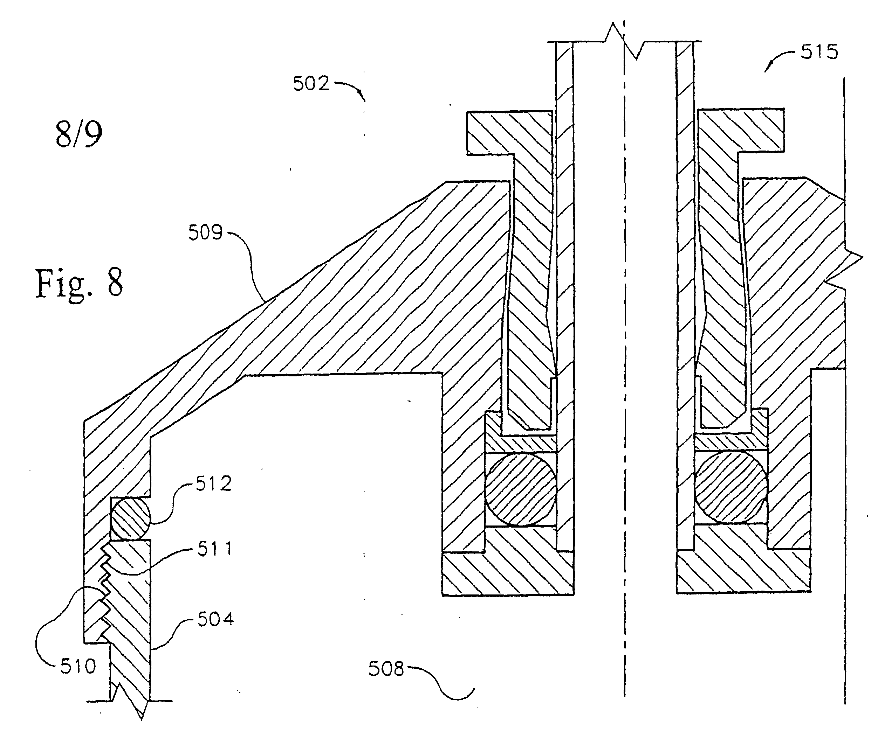

Referring to Figures 1-9, there are shown several designs of which Figures 7 and 8 show two, but not the only, embodiments of the invented water purifier with collet and tube support system.

Figure 1 is a perspective view of a water purifier design. Water purifier 10 includes ports 14 and 22 on axis 26 which passes through cap 16, body 18, and cap 20. Ports 14 and 22 include watertight seals to be described below which permit installation with sharp bends near the ports and permit installation without regard to vibration of tubes 12 and 24 or the orientation of the gravitational force on the body.

In the installation shown, tube 12 includes a sharp bend 13 and tube 24 includes a sharp bend 23 prior to entry into ports 14 and 22 respectively. Such sharp bends create a moment, i.e. a non-axial force. When body 18 is not supported, gravity presents an additional moment at ports 14 and 22. These comparatively steady state moments are modulated by vibration conducted in tubes 12 or 24, or both. The ports compensate for the sum of these moments.

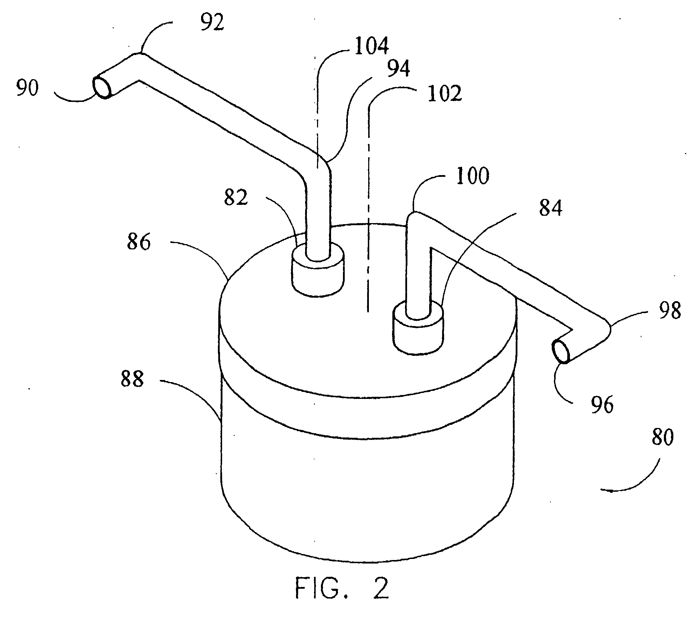

Figure 2 is a perspective view of another water purifier design. Water purifier 80 includes ports 82 and 84, cap 86, and body 88. Connection of tube 90 to port 82 could not be made in the confined space available without sharp bends 92 and 94. Likewise connection of tube 96 to port 84 could not be made in the installation illustrated without sharp bends 98 and 100. Water purifier 80 is exposed to moments similar to those described with reference to Figure 1. In addition, moments about body axis 102 will have component moments, for example, about axis 104 through port 82. Due to the non-coplanar bends 92, 94, 98, and 100 and asymmetric center of mass of body 88, moments at port 82 include mechanical harmonics and resonances at unexpectedly high amplitudes.

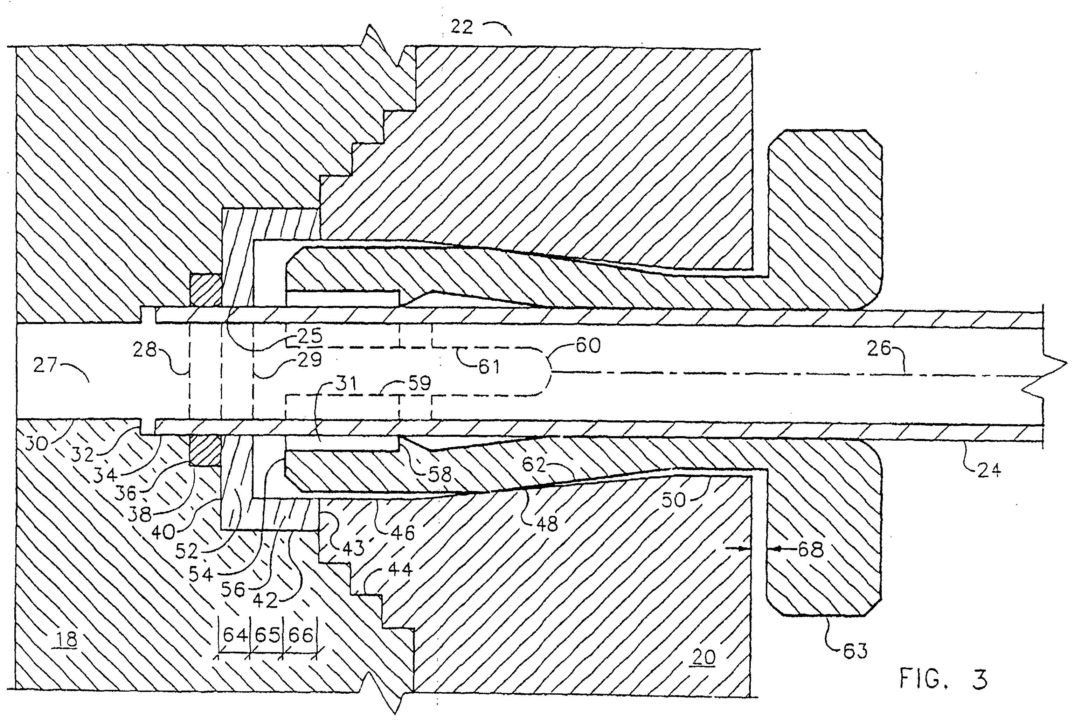

To prevent weeping, fatigue, wear, and possible catastrophic failure of the seals at ports 14, 22, 82, and 84, these include watertight seals. Each body 18 and 88 includes means for water purification including such known devices and combinations as water treatment apparatus, fillers, resins, mineral and biological treatment reagents, mixing baffles, membranes, screens, valves, other fluid control mechanisms, and replaceable cartridges. In an in-line water purifier application, line pressure exists throughout water purifier 20 and 80. In addition, fluid purification presents nonuniform fluid resistance which in combination with sudden changes in line pressure gives rise to pressures at ports 14, 22, 82, and 84 that exceed line pressure. The intermittent nature of line pressure changes makes diagnosing problem seats difficult and makes watertight seals economically important. Watertight seals are described below with reference to Figure 3.

Figure 3 is a cross section of a port of the water purifier of Figure 1. Port 22, as illustrated, is exemplary and identical in all relevant respects to ports 14, 82, and 84. Port 22 includes bore 27 in body 18, O-ring 28, support ring 29, bore 31 in cap 20, and collet 63. To assemble, O-ring 28 is placed in body 18, followed by support ring 29. Cap 20 is then conventionally joined to body 18 at stepped surface 44. Finally, collet 63 is snapped into bore 31. Tube 24 can then be inserted on axis 26 through collet 63, support ring 29, and O-ring 28 until tube 24 meets surface 32 in body 18. Water under pressure can then pass between tube 24 and passageway 30. Water pressure forces tube 24 away from surface 32; however, collet 63 is thereby forced against frustoconical surface 48 to retain the tube.

Bore 27 is a stepped bore in that it includes three steps. The first step provides a tube stop to position the end of tube 24 on entry to port 22. The first step includes radial surface 32 (normal, i.e. perpendicular, to axis 26) and axial surface 34 (parallel to axis 26). The axial length of axial surface 34 in alternate designs proceeds further into body 18 to provide additional leverage to oppose radial movement of tube 24.

The second step provides sealing surfaces for O-ring 28. The second step includes radial surface 36 and axial surface 38. In a first design, O-ring 28, a conventional rubber O-ring, is sized to accept tube 24 on entry and collapse against surface 38 to form a watertight seal.

The third step provides support for support ring 29. The third step includes radial surface 40 that locates support ring 29 during assembly. Support ring 29 bears in part against axial surface 42 and in part against radial surface 40 to inhibit and limit radial movement of tube 24 within port 22. The length of leg 56 and surface 42, if increased, provides additional support for support ring 29 on axial surface 42. Support ring 29 is made of ABS plastic for rigidity, strength, and dimensional stability as well as fluid properties including nonhygroscopic properties that are compatible with water purification.

Radial movement of a tube through a conventional 0-ring seal causes such a seal to separate from its sealing surface. Here, however, radial movement of tube 24 is limited so that 0-ring 28 does not separate from scaling surface 38 or tube surface 25. Limiting is accomplished by contact between support ring 29 and surfaces 42, 43, and 40 and contact between support ring 29 and tube 24 at tube surface 25. In addition, radial movement of tube 24 off axis 26 is further limited, reduced, or eliminated by the cooperation of tube 24 against surface 34.

Collet 63 includes several fingers 59, 61 separated by gaps, one shown as gap 60. Each finger, for example finger 59, includes a tooth 58 that grips tube 24 on insertion into collet 63 and resists removal of tube 24. Removal is resisted by conventional cooperation of bore 31 in contact with collet 63. Particularly, bore 31 includes axial surface 46, frustoconical surface 48, and axial surface 50. Collet 63 further includes face 54, and tapered surface 62. As face 54 is urged axially toward support ring 29, tapered surface 62 moves in spring tension away from axis 26, disengaging tooth 58 of finger 59 and other teeth on respective fingers from tube 24 and thereby allowing removal of tube 24 from collet 63.

Support ring 29 preferably includes a radial leg 52 and an axial leg 56, both dimensioned for support of tube 24 and for operation of collet 63. Specifically, thickness 64 of leg 52 is sized to support tube 24 without buckling under expected radial moments in tube 24. Distance 65 allows sufficient movement of collet 63 to release tooth 58. Distance 65 is greater than distance 68 so that O-ring 28 is not affected by movement of collet 63 whether during insertion of tube 24 through collet 63 or during removal of tube 24 from collet 63. Collet 63 extends into support ring 29 a distance 66. Further, as a consequence of the overlap between support ring 29 and collet 63, when collet 63 is subject to radial loading, collet 63 is aligned on tube 24, tooth 58 and other teeth on respective fingers are aligned in proper relation to tube 24, and tube 24 is thereby axially aligned in bores 31 and 27. The functions of support ring 29 are enhanced as one consequence of maintaining such alignment among collet, tube, and bores.

Tube 24 may be of conventional copper construction and dimension. Alternate designs accept tubes of various metallic and plastic materials having various bend and strength criteria. Compatible alternative dimensions for steps and distances 64 through 68 are considered within ordinary design skills of those practicing the present invention.

In the design illustrated in Figure 3, bore 27, support ring 29, collet 63, and cap 20 cooperate as means for supporting tube 24 in body 18. Bore 27, support ring 29, and O-ring 28 cooperate as means for sealing tube 24 with body 18.

Altematively, stepped surface 44 may be formed in any manner compatible with the method and equipment used to join the cap to the body. Body 18 and cap 20 are joined in alternate and equivalent designs by bonding, sonic welding, adhesive, screw thread, bayonet, or press fit, to name a few conventional techniques. Collets of alternate construction may be used, for example, a two-piece collet having a separable ring of teeth may be used.

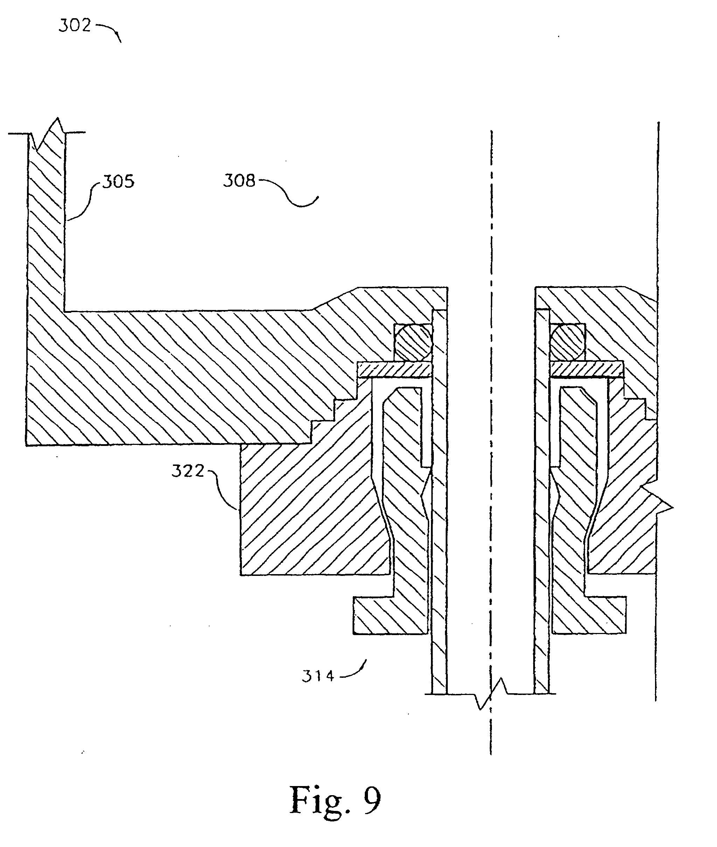

Still further, support ring 29 in alternate design provides additional support with an axial leg that extends both toward the collet and away from the collet into a groove in the body. When distance 64 is made sufficient for supporting tube 24, axial leg 56 may be omitted. Alternatively, axial leg 56 also may be omitted as shown in Figure 9, where the collet retainer extends to reach and retain the radial leg of the support ring. In such a design, therefore, the support ring preferably consists only of a radial leg with no axial leg, and may be called a "flat" support ring or a "washer-style" support ring. Such a flat support ring, therefore, has a rectangular cross-section, rather than an L-shaped cross-section.

In Figures 1 and 2, the means for water purification is surrounded by a multi-part enclosure which includes cap 16, body 18, and cap 20 (Figure 1) or cap 86 and body 84 (Figure 2). Caps 16 and 86 are examples of collet retainers, which may alternatively be fashioned as a part of an enclosure other than a cap or fashioned separately to cooperate with any portion of an enclosure. Examples of a portion of an enclosure acting as a collet retainer are shown in Figures 7 and 8 and described below. Bodies 18 and 88 are examples of support retainers, which may be fashioned as a part of an enclosure other than the body or fashioned separately to cooperate with any portion of an enclosure. Thus, the collet retainer and/or support retainer may be fashioned as part of a cap, a body, a bulkhead, a partition, a side wall, an end wall, or a backing, such as a plate, a washer, or a sleeve.

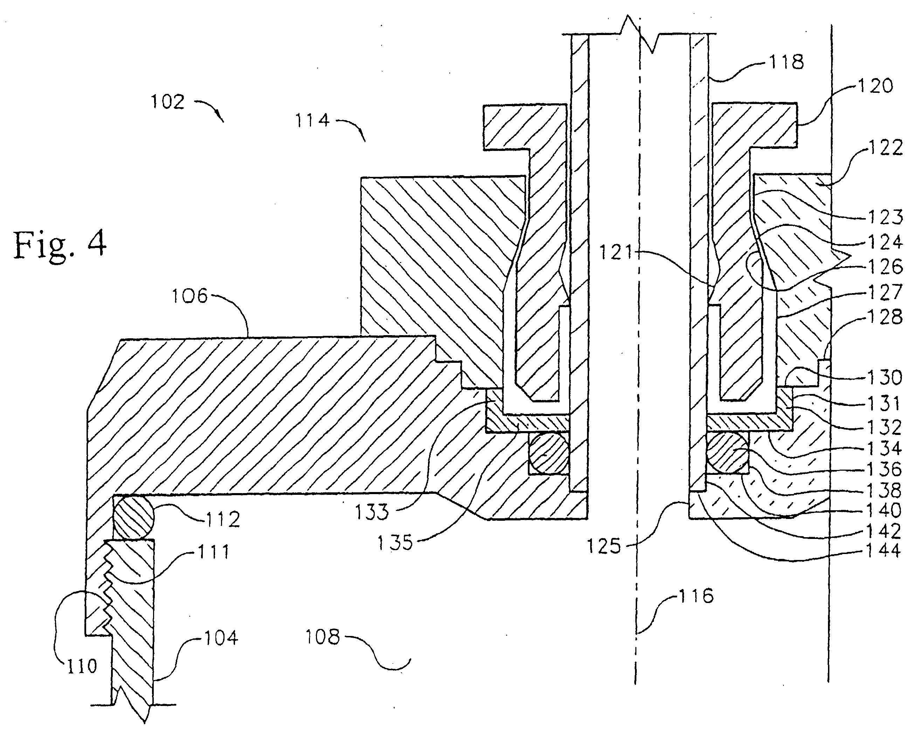

Alternative designs are shown in Figures 4-8, which illustrate designs wherein the enclosure for receiving the water purifying apparatus also serves as a support retainer, and, optionally, also as the collet retainer. Figures 7 and 8 illustrate the use of a plug system for capturing the seal and support ring in an enclosure bore.

Figure 4 is a cross section of port 114 of water purifier 102. Water purifier 102 is an example of a vessel used in fluid processing. By application of the teachings of Figure 4, several completely enclosed vessel configurations are practicable. In a first configuration, barrel 104 is formed as a cup, having no other ports. A single port 114 supports operation of the vessel, for example, as a fluid capacitor. In another configuration, similar in all other respects with the configuration discussed above, cover 106 has multiple ports. In operation, each port provides fluid communication to enclosed volume 108. In yet another configuration, barrel 104 is formed as a tube having two open ends and a respective threaded surface at each end. A cover similar to cover 106 is joined to barrel 104 at the end not shown in Figure 4. In further configurations, each such cover has multiple ports similar to port 114.

As illustrated, water purifier 102 includes port 114, cover 106, and barrel 104. In any of the above described configurations, port 114, having an axis 116, provides a fluid-tight seal between tube 118 and enclosed volume 108. Tube 118 is pressed into port 114 in a direction along the axis and toward the enclosed volume 108, enclosed in part by cover 106 and barrel 104. Barrel 104, having a threaded surface 111, seals against O-ring 112 in cooperation with threaded surface 110 of cover 106.

Port 114 includes stepped bore 125 in cover 106, O-ring 136, support ring 132, collel retainer 122, and collet 120. Stepped bore 125 includes radial surface 144, axial surface 142, radial surface 140, axial surface 138, radial surface 134, axial surface 131 and a surface for joint 128. Radial surface 144 operates as a tube stop surface. Axial surface 142 opposes radial movement of tube 118 off axis 116. Radial surface 140 and axial surface 138 cooperate as a first step providing a seating surface, 140 or 138 or both, for O-ring 136. Radial surface 134 and axial surface 131 cooperate as a second step, providing a supporting surface, 134 or 138 or both, for support ring 132. Support ring 132 fits snugly against tube 118 to couple a radial moment in tube 118 to the interior of bore 125, thereby retaining O-ring 136 on a sealing surface and maintaining the fluid-tight seal.

Support ring 132 includes axial portion 133 and radial portion 135. In operation, support ring 132 bears in part against surface 131 and in part against surface 134. In an alternate design, a functionally similar support ring bears against similar surfaces, though the alternate support ring is formed as a conventional thrust washer, having uniform thickness.

Collet retainer 122 includes bore 123, frustoconical surface 124, and axial surface 127. Collet 120 is of the conventional type having several fingers, two of which are shown in Figure 1. Each finger has a tooth 121 that engages onto tube 118, preventing release of tube 118 from collet 120. Tube 118 is also of a conventional type formed of either a metal, such as copper, or of a somewhat more flexible material such as rubber or plastic.

To assemble the port, O-ring 136 is placed in stepped bore 125, followed by support ring 132. Collet retainer 122 is then conventionally joined to stepped bore 125 at joint 128. Finally, collet 120 is snapped into bore 123 in collet retainer 122, making support ring 132 captive in the port. Collet retainer 122 abuts support ring 132 at abutment surface 130, holding support ring 132 against surface 134 and against some compression resistance of O-ring 136.

When water purifier 102 is installed for operation, tube 118 is inserted on axis 116 through collet 120, support ring 132, and O-ring 136 until tube 118 meets bore radial surface 144 which operates as a tube stop surface. Water under pressure is then passed between tube 118 and enclosed volume 108. Water pressure forces tube 118 away from surface 144; however, surface 126 of collet 120 is thereby forced against frustoconical surface 124 of collet retainer 122 to retain tube 118 in mechanical communication with water purifier 102.

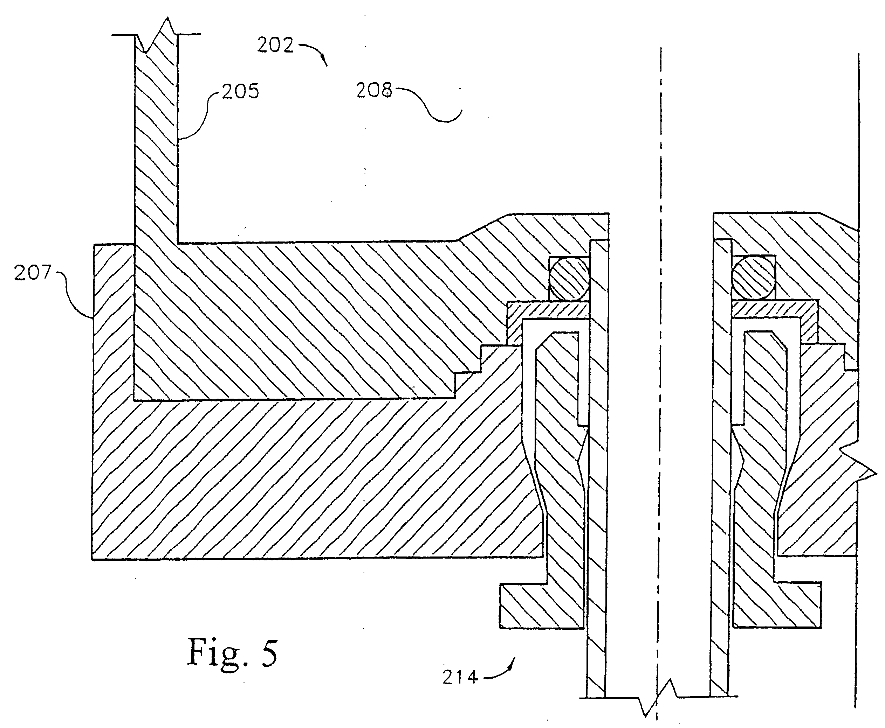

Figure 5 is a cross section of port 214 of water purifier 202. By application of the teachings of Figures 4 and 5, several additional configurations arc practicable. In a first configuration, barrel 205 is open at an opposite end, not shown, and a second collet retainer cap similar to collet retainer cap 207 is conventionally joined at that end to enclose volume 208. In another configuration, the structure shown in Figure 5 is combined with the structure shown in Figure 4 to form a complete enclosure. In such a configuration, items 104 and 205 identify one barrel that includes threaded surface 111 as shown in Figure 4 for joining to cover 106. In yet another configuration, barrel 205 is manufactured as a complete prefabricated enclosure to which one or more collet retainer caps 207 are attached.

As illustrated, water purifier 202 includes port 214, collet retainer cap 207, and barrel 205. Port 214 is similar to port 114 described with reference to Figure 4. Collet retainer cap 207 is similar to collet retainer 122, described with reference to Figure 4, yet in addition, collet retainer cap 207 extends as a cap across barrel 205. By extending across barrel 205, collet retainer cap 207 provides additional structural integrity to the enclosure.

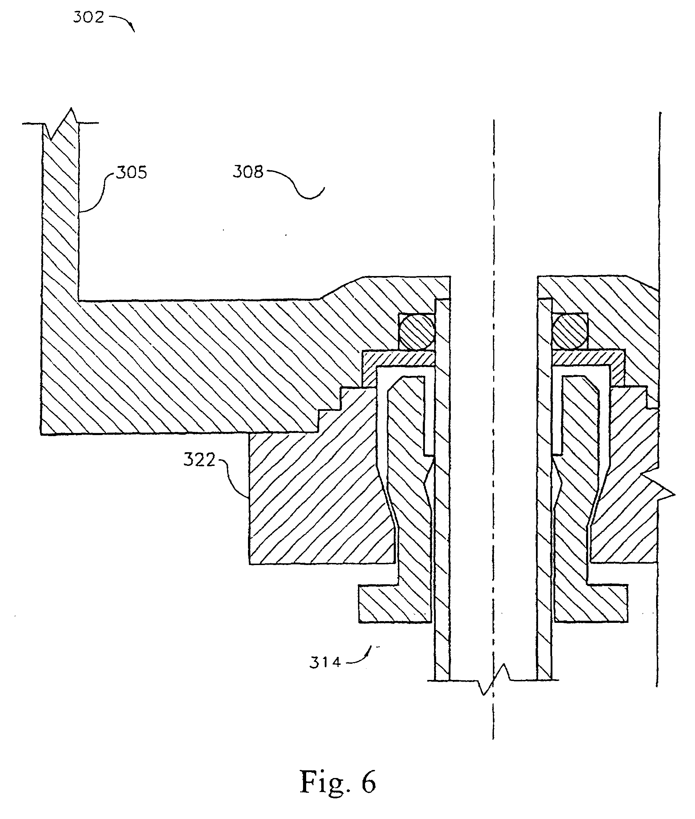

Figure 6 is a cross section of port 314 of water purifier 302. As illustrated, water purifier 302 includes port 314, collet retainer 322, and barrel 305 surrounding enclosed space 308. Port 314 is similar to port 114 discussed with reference to Figure 4. Also, collet retainer 322 is similar to collet retainer 122 discussed with reference to Figure 4.

In an important design of a water purifier, the structure of Figure 4 is combined with the structure of Figure 6 to form a complete enclosure. In such a configuration, items 104 and 305 identity one barrel that includes threaded surface 111 for joining to cover 106. This configuration is preferred when using collet retainers because common parts are used at each port 114 and 314, simplifying manufacture.

Figure 7 is a cross section of port 415 of water purifier 402 in an embodiment of the present invention. In a first configuration, barrel 407 is open at an opposite end, not shown, and a collet retainer cap similar to collet retainer cap 207 is conventionally joined at that end to enclose volume 408. In another configuration, the structure shown in Figure 7 is combined with the structure shown in Figure 4 to form a complete enclosure. In such a configuration, items 104 and 407 identify one barrel that includes threaded surface 111 as shown in Figure 4 for joining to cover 106.

As illustrated, water purifier 402 includes port 415 and barrel 407. In any of the above described configurations, port 415 provides a fluid-tight seal between tube 418 and enclosed volume 408. Tube 418 is pressed into port 415, having an axis 416, in a direction along the axis and toward the enclosed volume 408, enclosed in part by barrel 407.

Port 415 includes collet 420, bore 423 in barrel 407, support ring 432, O-ring 436, and plug 439. Collet 420 is of the conventional type having several fingers, two of which are shown in Figure 7. Each finger has a tooth 421 that engages onto tube 418, preventing release of tube 418 from collet 420. Tube 418 is also of the conventional type formed of either a metal, such as copper, or of a somewhat more flexible material such as rubber or plastic.

Bore 423 includes frustoconical surface 424, axial surface 427, radial surface 430, axial surface 438, and radial surface 441. Radial surface 430 and axial surface 438 cooperate as a step providing a supporting surface, 430 or 438 or both, for support ring 432. Axial surface 438 and surface 440 of plug 439 cooperate to provide a sealing surface, 440 or 439 or both, for O-ring 436. Support ring 432 fits snugly against tube 418 to couple a radial moment in tube 418 to interior surfaces of bore 423, thereby retaining O-ring 436 on a sealing surface and maintaining the fluid-tight seal.

Support ring 432 includes axial portion 433 and radial portion 435. In operation, support ring 432 bears in part against surface 430 and in part against surface 438. In an alternate embodiment, a functionally similar support ring bears against similar surfaces, though the alternate support ring is formed as a conventional thrust washer, having uniform thickness.

Plug 439 includes bore 446, radial surface 440, axial surface 443, and radial surface 441. Radial surface 444 and axial surface 442 cooperate as a step to hold tube 418 in proper position. Surface 442 fits snugly against tube 418 to limit radiai movement of tube 418 off axis 416. Surface 444 provides a tube stop surface, locating tube 418 at a preferred position within bore 423 in rotation to O-ring 436 and support ring 432. Axial surface 443 and radial surface 441 cooperate as a step to property locate plug 439 in bore 423.

To assemble port 415, support ring 432 is placed in bore 423, followed by O-ring 436. Plug 439 is then joined to barrel 407 by conventional technique such as welding or applying an adhesive. Plug 439 applies some tension via O-ring 436 to support ring 432 to hold support ring 432 against abutment surface 430. Support ring 432 is thereby made captive to port 415. Finally, collet 420 is snapped into bore 423.

When water purifier 402 is installed for operation, tube 418 is inserted on axis 416 through collet 420, support ring 432, and O-ring 436 until tube 418 meets plug radial surface 444 which operates as a tube stop surface. Water under pressure is then passed between tube 418 and enclosed volume 408. Water pressure forces tube 418 away from surface 444; however, collet 420 is thereby forced against frustoconical surface 424 of bore 423 to retain tube 418 in mechanical communication with water purifier 402.

Figure 8 is a cross section of port 515 of water purifier 502 in a further embodiment of the present invention. Water purifier 502 is yet another example of a vessel used in fluid processing. When the structure shown in Figure 8 is used in any of the aforementioned configurations to replace the structure described with reference to Figure 4, numerous further practicable configurations result. Of these configurations, a water purifier in a preferred embodiment combines the structures of Figures 7 and 8. In such an embodiment, items 407 and 504 identify one barrel that includes threaded surface 511 as shown in Figure 8 for joining to cover 509. Such an embodiment is preferred for several reasons which reduce manufacturing costs and increase market penetration. These reasons include simplicity of manufacture; aesthetic quality of the exterior surface; maintainability of the exterior surface; simplicity, uniformity, and consequential reliability of ports 415 and 515; and commonality of port components.

As illustrated, water purifier 502 includes port 515, cover 509, O-ring 512, and barrel 504. In any of the above described configurations, port 515 provides a fluid-tight seal between tube 518 and enclosed volume 508. Port 515 is similar to port 415 discussed with reference to Figure 7. The cooperation of cover 509 having threaded surface 510, O-ring 512, and barrel 504 having threaded surface 511 is similar to features shown and described in Figure 4, namely, cover 106, surface 110, O-ring 112, barrel 104, and surface 111.

The port structure shown in Figs. 7 and /or 8 can be used with the water purifier of Fig. 1 or Fig. 2 if desired.

All illustrated parts arc preferably, but not necessarily, manufactured of plastic, synthetic rubber, or rubber, respectively, of grades selected to meet the performance requirements of the particular fluid process. For purifying water at conventional pressures, O-rings are conventionally formed of rubber or neoprene and all other parts are conventionally formed of polyethylene. Enclosed volumes 108, 208, 308, 408, and 508 include conventional apparatus for water purification, not shown. Conventional baffles, walls, filtering materials, processing zones, and the like arc included in the enclosed volume in alternate embodiments to channel, direct, block, distribute, combine, filter, impart reagents to, remove substances from, and otherwise process fluid flow within the enclosed volume. Other known seals may be used as functional replacements for O-rings shown and described. For example, resilient washers and known gasket materials are equivalent.

Still further, bores described above may be formed by removing material by conventional techniques or by casting to the desired shape. In an alternate embodiment, rough casting is followed by further removal of material to obtain desired tolerances of manufacturing.

Tube stop surfaces may be omitted in further embodiments wherein sufficient tube insertion is assured by conventional means, including for example, markings on the tube and methods involving grasping the tube at a measured distance from the end to be inserted.

Although this invention has been described above with reference to particular means, materials, and embodiments, it is to be understood that the invention is not limited to these disclosed particulars, but extends instead to all equivalents within the scope of the following claims.

## Claims

1. A water purifier (402; 502) comprising:
a barrel (407) having an outside surface, a first end, a second end, an interior space (408; 508) for containing purification media, and a port (415; 515) in the first end wherein said port comprises a bore (423) defined by a bore wall, the bore comprising a bore first end near the outside surface of the barrel and a bore second end near said interior space, the bore having a portion which diverges in the axial direction from the bore first end towards the bore second end;
a collet (420) received in the bore first end and having an axial passage;
a support ring (432) inserted into the bore second end and contacting the bore wall;
a seal (436) inserted into the bore second end and contacting the bore wall;
a plug (439) extending from the barrel interior space axially into the bore second end to retain said seal and said support ring in said bore second end,
the purifier being adapted for connection to a water-carrying tube (418) having an axis (416), an outer surface, and a tube end, the port being adapted to provide a fluid-tight seal between the tube and the interior space; the tube being receivable in
the bore from the bore first end to the bore second end, extending through the collet axial passage, and being grippable by the collet; the support ring being adapted to contact the outer surface of the tube so as to resist radial movement of the tube in the bore; and the seal being adapted to contact the outer surface of the tube to seal said outer surface of the tube to the bore wall.

2. The purifier of Claim I wherein the support ring (432) comprises an L-shaped cross section having an axial leg (433) aligned along the axis (416) and a radial leg (435) aligned normal to the axis (416).

3. The purifier of Claim 1 wherein the plug (439) is secured inside the bore by welding.

4. The purifier of Claim 1 wherein the plug (439) is secured inside the bore by adhesive.

5. The purifier of Claim 1 wherein the support ring is a flat ring consisting only of a radial leg.

6. The purifier of Claim 1 wherein said second end of the barrel (407) comprises a second end port (415; 515) for receiving a second fluid-conducting tube (418), wherein said second end port comprises a second bore (423) containing a second retainer ring (432) and a second seal (436), and the second end port further comprises a second generally cylindrical plug (439) extending axially from the interior space (408; 508) into the second bore and retaining said second retainer ring and said second seal in the second bore.

7. A method for assembling a filter cartridge (402; 502) for purifying water, the filter cartridge comprising a vessel with an exterior, an interior space (408; 508) for receiving filtration media, and a port (415; 515) into the interior space for receiving a water tube (418), the port comprising a bore (423) having an axis (416), wherein axial assembly of the port is in a first direction on the axis from the exterior toward the interior space and on a second direction on the axis from the interior space toward the exterior, the method comprising, in sequence:
a. inserting a support ring (432) into the bore in the second direction;
b. inserting an O-ring (436) into the bore in the second direction; and
c. inserting a plug (439) into the bore in the second direction; and
wherein the method further comprises:
inserting a collet (420) into the bore in the first direction; and
inserting a tube (418) through the collet into the bore in the first direction.

8. The method of Claim 7 further comprising, without regard to sequence:
introducing a means for fluid processing into the vessel; and
sealing the vessel.

## Patentansprüche

1. Wasserreiniger (402; 502), umfassend:
ein Fass (407) mit einer Außenseite, einem ersten Ende, einem zweiten Ende, einem Innenraum (408; 508) zum Enthalten von Reinigungsmittel und einem Kanal (415; 515) im ersten Ende, wobei der genannte Kanal eine Bohrung (423) umfasst, die von einer Bohrungswand definiert wird, wobei die Bohrung ein erstes Bohrungsende nahe der Außenseite des Fasses und ein zweites Bohrungsende nahe des genannten Innenraums aufweist, wobei die Bohrung einen Teil hat, der in der axialen Richtung vom ersten Bohrungsende zum zweiten Bohrungsende auseinandergeht;
eine im ersten Bohrungsende aufgenommene und einen axialen Durchgang aufweisende Hülse (420);
einen in das zweite Bohrungsende eingesetzten und die Bohrungswand berührenden Stützring (432);
eine in das zweite Bohrungsende eingesetzte und die Bohrungswand berührende Dichtung (436);
einen Stopfen (439), der sich von dem Fassinnenraum axial in das zweite Bohrungsende erstreckt, um die genannte Dichtung und den genannten Stützring in dem genannten zweiten Bohrungsende zu halten;
wobei der Reiniger zum Anschluss an ein Wasser führendes Rohr (418) mit einer Achse (416), einer Außenseite und einem Rohrende ausgeführt ist, wobei der Kanal ausgeführt ist, um eine fluiddichte Dichtung zwischen dem Rohr und dem Innenraum bereitzustellen; das Rohr in der Bohrung vom ersten Bohrungsende bis zum zweiten Bohrungsende aufnehmbar, wobei es sich durch den axiale Hülsendurchgang erstreckt, und von der Hülse einspannbar ist; der Stützring ausgeführt ist, um die Außenseite des Rohres zu berühren, um einer radialen Bewegung des Rohres in der Bohrung zu widerstehen, und die Dichtung ausgeführt ist, um die Außenseite des Rohres zu berühren, um die genannte Außenseite des Rohres zur Bohrungswand abzudichten.

2. Reiniger nach Anspruch 1, bei dem der Stützring (432) einen L-förmigen Querschnitt aufweist, der einen entlang der Achse (416) ausgerichteten axialen Schenkel (433) und einen normal zur Achse (416) ausgerichteten radialen Schenkel (435) hat.

3. Reiniger nach Anspruch 1, bei dem der Stopfen (439) durch Schweißen in der Bohrung befestigt ist.

4. Reiniger nach Anspruch 1, bei dem der Stopfen (439) mit Klebstoffin der Bohrung befestigt ist.

5. Reiniger nach Anspruch 1, bei dem der Stützring ein flacher Ring ist, der nur aus einem radialen Schenkel besteht.

6. Reiniger nach Anspruch 1, bei dem das genannte zweite Ende des Fasses (407) einen Kanal im zweiten Ende (415; 515) zum Aufnehmen eines zweiten Fluid leitenden Rohres (418) aufweist, wobei der genannte Kanal im zweiten Ende eine zweite Bohrung (423) aufweist, die einen zweiten Halterring (432) und eine zweite Dichtung (436) enthält, und der Kanal im zweiten Ende ferner einen zweiten allgemein zylindrischen Stopfen (439) aufweist, der sich vom Innenraum (408; 508) axial in die zweite Bohrung erstreckt und den genannten zweiten Halterring und die genannte zweite Dichtung in der zweiten Bohrung hält.

7. Verfahren zum Montieren einer Filterpatrone (402; 502) zum Reinigen von Wasser, wobei die Filterpatrone einen Behälter mit einem Äußeren, einen Innenraum (408; 508) zum Aufnehmen von Filtrationsmittel und einen Kanal (415; 515) in den Innenraum zum Aufnehmen eines Wasserrohres (418) umfasst, wobei der Kanal eine Bohrung (423) mit einer Achse (416) aufweist, wobei die axiale Montage des Kanals in einer ersten Richtung auf der Achse vom Äußeren in Richtung auf den Innenraum und in einer zweiten Richtung auf der Achse vom Innenraum in Richtung auf das Äußere erfolgt; wobei das Verfahren der Reihe nach Folgendes umfasst:
a. Einsetzen eines Stützrings (432) in die Bohrung in der zweiten Richtung,
b. Einsetzen eines O-Rings (436) in die Bohrung in der zweiten Richtung und
c. Einsetzen eines Stopfens (439) in die Bohrung in der zweiten Richtung; und wobei das Verfahren ferner Folgendes aufweist:
Einsetzen einer Hülse (420) in die Bohrung in der ersten Richtung und
Einsetzen eines Rohres (418) durch die Hülse in die Bohrung in der ersten Richtung.

8. Verfahren nach Anspruch 7, ferner umfassend, ungeachtet der Reihenfolge:
Einführen eines Mittels für die Fluidverarbeitung in den Behälter und dichtes Verschließen des Behälters.

## Revendications

1. Epurateur d'eau (402 ; 502) comprenant:
un corps (407) possédant une surface extérieure, une première extrémité, une deuxième extrémité, un espace interne (408 ; 508) servant à contenir le milieu d'épuration, et un orifice (415 ; 515) pratiqué dans la première extrémité, dans lequel ledit orifice comprend un alésage (423) qui est défini par une paroi d'alésage, l'alésage comprenant une première extrémité d'alésage à proximité de la surface extérieure du corps et une deuxième extrémité d'alésage à proximité dudit espace interne, l'alésage possédant une partie qui diverge, dans le sens axial, depuis la première extrémité d'alésage vers la deuxième extrémité d'alésage ;
un collier (420) qui est reçu dans la première extrémité d'alésage et ayant un passagè axial ;
un anneau de support (432) qui est introduit dans la deuxième extrémité d'alésage et qui entre en contact avec la paroi d'alésage ;
un joint (436) qui est introduit dans la deuxième extrémité d'alésage et qui entre en contact avec la paroi d'alésage ;
un obturateur (439) qui s'étend depuis l'espace interne du corps, selon un plan axial, dans la deuxième extrémité d'alésage afin de retenir ledit joint et ledit anneau de support dans ladite deuxième extrémité d'alésage ;
l'épurateur étant adapté de façon à être branché sur un tube d'acheminement d'eau (418) ayant un axe (416), une surface externe, et une extrémité de tube, l'orifice étant adapté pour assurer un joint étanche au fluide entre le tube et l'espace interne ; le tube pouvant être reçu dans l'alésage depuis la première extrémité d'alésage jusqu'à la deuxième extrémité d'alésage, s'étendant à travers le passage axial du collier, et pouvant être agrippé par le collier ; l'anneau de support étant adapté pour entrer en contact avec la surface externe du tube de sorte à résister au mouvement radial du tube dans l'alésage ; et le joint étant adapté pour entrer en contact avec la surface externe du tube afin de rendre étanche ladite surface externe du tube par rapport à la paroi d'alésage.

2. L'épurateur de la revendication 1, dans lequel l'anneau de support (432) comprend une coupe transversale en forme de L possédant une jambe axiale (433) qui est alignée le long de l'axe (416) et une jambe radiale (435) qui est alignée perpendiculairement par rapport à l'axe (416).

3. L'épurateur de la revendication 1, dans lequel l'obturateur (439) est fixé à l'intérieur de l'alésage par soudage.

4. L'épurateur de la revendication 1, dans lequel l'obturateur (439) est fixé à l'intérieur de l'alésage par un adhésif.

5. L'épurateur de la revendication 1, dans lequel l'anneau de support est un anneau plat uniquement constitué d'une jambe radiale.

6. L'épurateur de la revendication 1, dans lequel ladite deuxième extrémité du corps (407) comprend un deuxième orifice d'extrémité (415 ; 515) destiné à recevoir un deuxième tube d'acheminement de fluide (418), dans lequel ledit deuxième orifice d'extrémité comprend un deuxième alésage (423) contenant un deuxième anneau de retenue (432) et un deuxième joint (436) et le deuxième orifice d'extrémité comprend en outre un deuxième obturateur (439) généralement cylindrique qui s'étend dans le plan axial depuis l'espace interne (408 ; 508) jusque dans le deuxième alésage et retient ledit deuxième anneau de retenue et ledit deuxième joint dans le deuxième alésage.

7. Procédé servant à assembler une cartouche de filtre (402 ; 502) pour purifier l'eau, la cartouche de filtre comprenant un réservoir avec une face externe, un espace interne (408 ; 508) pour recevoir le milieu de filtration, et un orifice (415 ; 515) dans l'espace interne pour recevoir un tube à eau (418), l'orifice comprenant un alésage (423) ayant un axe (416), dans lequel l'ensemble axial de l'orifice se trouve dans un premier sens sur l'axe à partir de la face externe vers l'espace interne et dans un deuxième sens sur l'axe à partir de l'espace interne vers la face externe, le procédé comprenant en séquence :
a. l'insertion d'un anneau de support (432) dans l'alésage selon le deuxième sens ;
b. l'insertion d'un joint torique (436) dans l'alésage selon le deuxième sens ; et
c. l'insertion d'un obturateur (439) dans l'alésage selon le deuxième sens ; et dans lequel le procédé comprend en outre :
l'insertion d'un collier (420) dans l'alésage selon le premier sens ; et
l'insertion d'un tube (418) à travers le collier dans l'alésage selon le premier sens.

8. Le procédé de la revendication 7, comprenant en outre, sans tenir compte de l'ordre de la séquence :
l'introduction d'un moyen servant à traiter le fluide dans le réservoir ; et
l'action destinée à rendre le réservoir étanche.
